# EUROPEAN PATENT SPECIFICATION

(11) **EP 3 825 563 B1**
(45) Date of publication and mention of the grant of the patent: **05.10.2022**
(21) Application number: 20208467.9
(22) Date of filing: 18.11.2020
(51) Int. Cl.: F16C 32/04

(54) **MAGNETIC BEARING**
MAGNETLAGER
PALIER MAGNÉTIQUE

(30) Priority: 20.11.2019 IT 201900021738
(43) Date of publication of application: 26.05.2021
(73) Proprietor: TSL S.r.l., 37124 Verona (IT)
(72) Inventor: Ferrigato, Mauro, 37135 Verona (IT)
(74) Representative: Manfrin, Marta

(56) References cited:
- EP-A2- 1 172 575
- EP-A2- 2 840 692
- CN-A- 101 979 888
- DE-B3-102007 037 186
- US-A- 5 506 459

## Description

The present disclosure refers to a magnetic bearing. More specifically, the present disclosure relates to a magnetic bearing comprising a plurality of permanent magnets which does not require electromagnets and, consequently, electric current.

In many applications, it is necessary to use a device that supports the weight of an apparatus and that allows, at the same time, the reciprocal movement, for example the rotation, of parts of said apparatus.

In this regard, bearings are often used, i.e. devices to support a load and to reduce the friction between two moving portions of the same apparatus as much as possible.

Bearings generally comprise a pair of coaxial cylinders or rings. More specifically, the bearings can comprise a first cylinder, or external cylinder, or stator, and a second cylinder, or internal cylinder, or rotor, coaxial with the first cylinder and arranged inside it.

Bearings, depending on the applications, can be divided into plain bearings and rolling-element bearings. The operation of the former is based on the use of a lubricating layer interposed between the rotor and the stator, while in the rolling-element bearings, the movement of the rotor with respect to the stator is facilitated by the presence of balls or rollers between these two.

In many applications, however, even rolling-element type bearings do not reduce the friction sufficiently between the stator and the rotor. Furthermore, both plain and rolling-element type bearings require frequent maintenance interventions relating, for example, to the lubrication of the various components. In addition, both of these types of bearings are subject to heavy wear. As a result, the risks of breakage increase significantly.

To try to at least partially obviate these disadvantages, a different type of bearing has been developed over the years that can support a load by means of magnetic levitation. In particular, this type of bearing, called magnetic bearing, is able to support a load without physical contact between the parts. For example, magnetic bearings are capable of magnetically levitating a rotating shaft and allowing its relative movement with respect to another component with very low coefficients of friction and substantially without mechanical wear due to contact between the moving parts. Furthermore, magnetic bearings, compared to traditional ones, are able to support much higher rotation speeds.

In particular, the currently available magnetic bearings are of the active type and generally comprise at least three components which cooperate with each other. In detail, an active magnetic bearing includes both fixed parts, i.e. the stator, and moving parts, i.e. the rotor. Generally, the stator is a hollow cylindrical body made of a permanent magnet. This permanent magnet further comprises a plurality of electromagnets configured to create a magnetic field capable of levitating the rotor located in the stator cavity.

Active magnetic bearings generally further include a position sensor configured to continuously monitor the position of the rotor relative to that of the stator.

Finally, there is usually a controller that, taking data from position sensors, determines the level of current to be applied to the coils of the electromagnets to keep the stator in the correct position.

While active magnetic bearings offer considerable advantages over plain or rolling-element bearings, they also have a number of disadvantages. First of all, they have considerably larger dimensions than traditional bearings. Secondly, they are much more complex and consequently expensive than rolling bearings, for example. Moreover, with the same dimensions of a rolling-element or plain bearing, they can withstand lower loads. Finally, active type magnetic bearings require electric current for magnetic levitation and complex electronic instruments for the control and command of the various components. All these aspects make these active magnetic bearings particularly expensive.

US 5 506 459 discloses a passive magnetic bearing according to the preamble of claim 1 and a method for operating a passive magnetic bearing according to the preamble of claim 11.

The present disclosure aims to provide a magnetic bearing which allows to overcome the aforementioned drawbacks with reference to the known art and/or to achieve further advantages.

This is achieved through a magnetic bearing and a process as defined in the respective independent claims. Secondary characteristics and particular embodiments of the object of this disclosure are defined in the respective dependent claims.

The present disclosure starts from the acknowledgment of the author of this disclosure, that the known bearings are not sufficiently efficient.

In particular, many devices require bearings able on the one hand to withstand high loads, on the other hand to obtain high rotation speeds with a friction coefficient as low as possible.

In other words, it is not possible to achieve both of these advantages at the same time with currently available bearings. In fact, the ball bearings are able to support high loads but do not allow the achievement of high rotation speeds. On the contrary, active magnetic bearings, while allowing the achievement of high rotation speeds due to the low coefficient of friction, have high dimensions and costs and are not able to support high loads.

As a result, there is no sufficiently reliable bearing that allows the advantages of traditional plain or rolling-element bearings and those of active magnetic bearings to be obtained at the same time.

In particular, the magnetic bearing object of the present disclosure comprises a stator and a rotor which extend along a longitudinal direction. In particular, the rotor is rotatable around an axis of rotation parallel to said longitudinal direction with respect to the stator and is arranged in a cavity of the latter in a concentric manner with respect to the stator itself. The stator cavity is defined by an internal surface of the stator itself and extends along said longitudinal direction too. The rotor of the magnetic bearing of the present disclosure comprises a plurality of magnets arranged at a surface of the rotor facing, and spaced from, the inner surface of the stator. In other words, this plurality of magnets are arranged at a surface of the rotor which, in use, is configured not to come into contact with said internal surface of the stator. In other words, the rotor, in use, is configured to levitate inside said stator. Specifically, each magnet of the plurality of magnets is polarized in a radial direction. Furthermore, the stator of the magnetic bearing of the present disclosure comprises at least three magnetic groups arranged concentric with the stator itself and consecutive along the longitudinal direction at the internal surface of the stator itself. Each of these magnetic groups is polarized along the radial direction in the opposite direction with respect to the plurality of rotor magnets in order to create a repulsive force between the rotor and the stator. Furthermore, each magnetic group is arranged in the stator so as to create a first force region and a second force region, radially opposite to the first force region. Specifically, the repulsive force between said stator and said rotor in the first force region is greater than the repulsive force between stator and rotor in the second force region. Due to the geometry of the parts described above it follows that the repulsive forces between the first force region and the second force region can be organized along the longitudinal direction so as to obtain an overall balance of forces.

It follows that, advantageously, the rotor of the magnetic bearing of the present disclosure is spaced apart in a stable manner with respect to the internal surface of the stator. In other words, the rotor is configured to, in use, levitate stably or dynamically stable, or not come into contact with the inner surface that defines the stator cavity. The levitation of the rotor is obtained with the use of permanent magnets. It follows that with the magnetic bearing according to this disclosure it is possible to obtain high rotation speeds and the ability to support high loads without the use of electromagnets that require electric current.

In other words, according to one aspect of the present disclosure, the first force region of each magnetic group is radially staggered with respect to the first force region of a consecutive magnetic group. That is to say, the stator comprises at least three magnetic groups arranged consecutively along said longitudinal direction at said internal surface of the stator and arranged staggered relative to each other in the radial direction around said axis of rotation and distributed along the internal surface of the stator around said rotor. Each magnetic assembly is configured to create a first force region and a second force region radially opposite to said first force region with respect to said axis of rotation, in which the repulsive force between said stator and said rotor is greater in said first region of force with respect to the repulsive force between said stator and said rotor in said second force region.

Furthermore, said at least three magnetic groups, when viewed from an axial end of the cavity, cover an entire cylindrical wall of the internal surface of the stator around said rotor, or wherein said at least three magnetic groups are homogeneously distributed around said axis of rotation and the repulsive force between said stator and said rotor in said first force region and in said second force region are set for each magnetic group so as to create, as said, an overall balance or compensation of repulsive forces along said longitudinal direction and said direction radial. It follows that the magnetic groups of the stator each define a point or region with greater magnetic pressure towards which the stator will be, at a magnetic group, pushed. The phase shift and the presence of at least three magnetic groups allows to obtain a sufficient stability of the rotor.

Specifically, according to a preferred aspect, the stator of the magnetic bearing of the present disclosure comprises three magnetic groups arranged consecutively along said longitudinal direction. In particular, the first force region of each magnetic group out of phase in the radial direction with respect to the first force region of a consecutive magnetic group of 120°.

Advantageously, therefore, the rotor is induced to levitate in said cavity of the stator at least three points or regions, in which said three points or regions are radially staggered with each other of 120°. This allows the rotor to levitate and rotate stably in said stator cavity.

According to a preferred aspect of the present disclosure, the stator comprises five magnetic groups arranged consecutively along the longitudinal direction so that the first force region of each magnetic group is out staggered in the radial direction with respect to the first force region of a consecutive magnetic group of 72°.

It follows that the rotor is induced to levitate at at least 5 points arranged consecutively along said longitudinal direction and staggered with each other in the radial direction. It follows that the static and dynamic stability of the rotor is greater.

According to a preferred aspect of the present disclosure, each magnetic assembly of the magnetic bearing stator of the present disclosure is a ring magnet having the shape of an eccentric.

It follows that the first and second force regions of each magnetic group are defined by the shape and arrangement of a ring magnet. The phase shift in the radial direction of the first force region of consecutive magnetic rings is achieved by rotating the eccentrics along the longitudinal direction. Advantageously, this solution is relatively simple and economical.

According to a further preferred aspect of the present disclosure, each magnetic group comprises a magnet with an arc of circumference or a plurality of magnets arranged aligned to form an arc of circumference at said internal surface of the stator. Preferably, according to a preferred aspect, said arc of circumference has an extension comprised between 210° and 230°.

Advantageously, the arc-circumferential magnets or the pluralities of magnets arranged aligned to form an arc of circumference confer greater stability and ensure better performance in terms of static and dynamic load than ring magnets with the shape of an eccentric.

According to a preferred aspect of the present disclosure, the stator comprises a plurality of annular portions arranged consecutively in the longitudinal direction each of which comprises a seat configured to house a magnet. Specifically, each ring magnet is arranged in one of said annular portions of the stator or the arc magnet of circumferences or each magnet of the plurality of magnets arranged aligned to form an arc of circumference is arranged in one of said annular portions of the stator.

Advantageously therefore, each stator magnet is arranged in a seat of the stator itself. As a result, the stator magnets are held firmly in position, promoting the stability of the bearing of the present disclosure.

According to a further aspect of the present disclosure, the stator further comprises a plurality of annular separating element arranged consecutively in the longitudinal direction. Each separator element is interposed between consecutive annular portions.

It follows that, advantageously, the annular portions comprising the magnets of the stator are spaced apart in a longitudinal direction, favoring the static and dynamic stability of the rotor.

According to a further aspect of the present disclosure, the magnetic bearing further comprises a containment device configured to stabilize the rotor in the longitudinal direction.

It follows that, while the magnetic groups of the stator and the plurality of rotor magnets stabilize the latter in the different radial directions with respect to the axis of rotation X, the containment device stabilizes the rotor itself in the longitudinal direction. In other words, this containment device prevents, or avoids, or reduces, the movements of the rotor in the longitudinal direction.

The present disclosure has as a further object a method for operating a magnetic bearing. This method comprises a step of providing a stator which extends along a longitudinal direction and which comprises a cavity defined by an internal surface of the stator itself and which also extends along the longitudinal direction. The method also provides a step of providing a rotor that extends in the longitudinal direction and a step of arranging the rotor concentric with respect to the stator in the cavity of the latter. The rotor comprises a plurality of magnets polarized in the radial direction and arranged at a surface of the rotor facing and spaced from the internal surface of the stator. The method comprises a further step of arranging at the internal surface of the stator at least three magnetic groups that are concentric with respect to the stator and consecutive along the longitudinal direction. Each magnetic group is biased in the radial direction in the opposite direction with respect to the plurality of rotor magnets in order to create a repulsive force between the rotor and the stator. Furthermore, each magnetic assembly is configured to create a first force region and a second force region, in which the repulsive force between the stator and the rotor is greater in the first force region than the repulsive force between rotor and stator in the second region of power.

Further, the magnetic groups are arranged in the stator so that the first force region of each magnetic group is staggered in the radial direction with respect to the first force region of a consecutive magnetic group.

According to a further preferred aspect, three magnetic groups are arranged in the stator so that the first force region of each magnetic group is staggered of 120° in the radial direction with respect to the first force region of a consecutive magnetic group. Alternatively, five magnetic groups are arranged in the stator so that the first force region of each magnetic group is staggered of 72° in the radial direction with respect to the first force region of a consecutive magnetic group.

According to a preferred aspect, the method comprises a further step of arranging in the stator a plurality of annular portions arranged consecutive in the longitudinal direction. Each of these annular portions comprises a seat configured to house a magnetic assembly.

According to a further preferred aspect of the present disclosure, the method comprises the further step of separating two consecutive annular portions in the longitudinal direction by arranging in the stator a plurality of annular separating elements arranged consecutively along the longitudinal direction. Each separator element is interposed between consecutive annular portions.

Further advantages, characteristics and methods of use of the object of this disclosure will be evident from the following detailed description of its embodiments, presented by way of example and not of limitation.

However, it is clear that each embodiment of the object of this disclosure may present one or more of the advantages listed above; however, each embodiment is not required to simultaneously present all the listed advantages.
- Figure 1 represents a schematic sectional view of a magnetic bearing according to an embodiment of the present disclosure;
- Figure 2 represents an exploded perspective view of a magnetic bearing according to an embodiment of the present disclosure;
- Figure 3 shows an exploded side view of a magnetic bearing according to an embodiment of the present disclosure;
- Figure 4 shows a perspective view of a magnetic bearing according to an embodiment of the present disclosure;
- Figure 5 shows a detail of a portion of a magnetic bearing according to an embodiment of the present disclosure.

With reference to the attached figures, an embodiment of a magnetic bearing is indicated with the reference number 100.

The term "magnetic bearing" means, in the context of the present disclosure, a device configured to lift a load and to allow the relative rotation of two distinct portions of the same apparatus.

More particularly, the magnetic bearing 100 object of the present disclosure is a passive magnetic bearing, i.e., it does not need current for correct operation. In other words, the magnetic bearing 100 object of this disclosure, unlike active magnetic bearings of the known art, is devoid of electromagnets and exploits the repulsive force between permanent magnets arranged with inverted or opposite polarity.

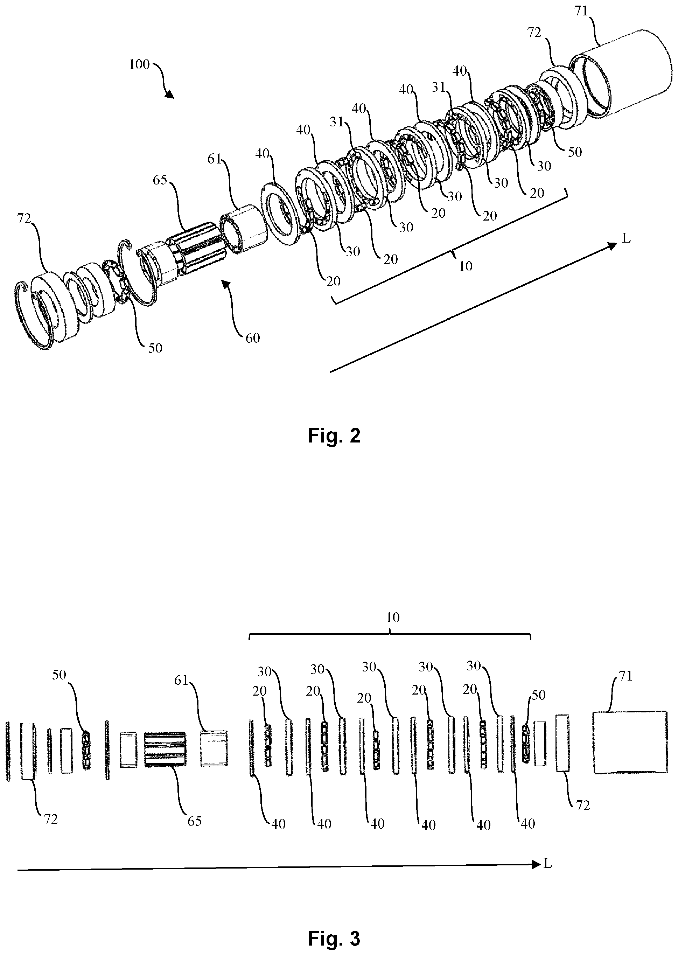

With reference to the accompanying Figures, in particular to Figures 2 and 3, according to an aspect of the present disclosure, the magnetic bearing 100 comprises a stator 10 and a rotor 60. In other words, the bearing comprises a set of fixed parts, the stator, and a set of parts moving with respect to said stator.

The stator 10 and the rotor 60 of the magnetic bearing 100 object of the present disclosure extend along a main direction of development, or longitudinal direction L and are arranged concentric with respect to each other.

Preferably, the stator 10 is a hollow cylindrical body comprising an internal surface 11 defining a cavity 12 which preferably extends along said longitudinal direction L. Preferably, the cavity 12 extends along the entire length of the stator 10. Furthermore, according to a preferred aspect, said cavity 12 is concentric with respect to the stator 10 itself.

The rotor 60 is preferably a cylindrical body rotatable, with respect to the stator 10, around an axis of rotation X parallel to the longitudinal direction L. Furthermore, the rotor 60 is located inside said cavity 12 of the stator 10. More specifically, preferably, the rotor 60 comprises an external surface 61 of the rotor 60 configured to be arranged facing and spaced apart from the internal surface 11 of the stator 10 which defines the cavity 12. In other words, the stator 10 and the rotor 60 are concentric elements with respect to the axis of rotation X, wherein the rotor 60 is arranged in the cavity 12 of the stator 10 so that the outer surface 61 of the rotor 60 does not come into contact with the inner surface 11 of the stator 10. In other words, the rotor 60 and the stator 10 are concentric elements around the axis of rotation X so that there is an opening, or gap, between said rotor 60 and said stator 10, and in particular between the surface the outer surface 61 of the rotor 60 and the inner surface 11 of the stator 10. Again, stated differently, the rotor 60 is a cylindrical element rotatable around an axis of rotation X and arranged concentrically inside a cavity of the stator with respect to said axis of rotation X.

In the magnetic bearing 100 according to the present disclosure, the opening, or gap, between the internal surface 11 of the stator 10 and the external surface 61 of the rotor 60 is obtained through repulsive magnetic forces. In other words, the rotor 60 of the magnetic bearing 100 is configured to magnetically levitate inside the stator 10, in particular in the cavity 12 of the stator 10.

More specifically, the rotor 60 comprises at least one magnet 65 located at the outer surface 61 and polarized along a radial direction Y. Preferably, this radial direction is a direction perpendicular to said longitudinal direction L or to said axis of rotation X. For example, the rotor 60 can comprise at least one magnet ring arranged at said external surface 61.

More preferably, the rotor 60 comprises a plurality of magnets 65. Preferably, these magnets 65 are circumferentially side by side with each other at the outer surface 61. In other words, such magnets 65 are preferably arranged at the outer surface 61 throughout the whole extension of this external surface 61. Furthermore, all the magnets of said plurality of magnets 65 are polarized in the same way as a magnet 65 following it. In other words, all of the magnets 65 are equally polarized. For example, each magnet 65 of said plurality of magnets comprises a positive pole facing the internal surface 11 of the stator 10 and a positive pole facing the axis of rotation X, or vice versa.

In order to magnetically levitate the rotor 60 in the cavity 12 of the stator 10, or to ensure that the outer surface 61 of the rotor does not come into contact, or does not rest, with the inner surface 11 of the stator 10, the latter comprises at least three magnetic groups 20.

According to a preferred aspect, said at least three magnetic groups 20 are arranged concentric with respect to the stator 10 and arranged consecutively along the longitudinal direction L. Furthermore, said at least three magnetic groups 20 are preferably arranged at the internal surface 11 of the stator 10.

According to an embodiment, each of said at least three magnetic groups 20 can be a ring magnet, a circumference arc magnet or a plurality of magnets arranged aligned to form a circumference arc, or a combination of these.

Furthermore, each of said magnetic groups 20 is polarized in the radial direction Y. More preferably each of said magnetic groups 20 is polarized in the opposite direction with respect to the magnets 65 of the rotor 60. For example, each magnetic group 20 of said at least three magnetic groups comprises a positive pole facing the internal cavity 12, or towards the rotor 60, and a negative pole facing the outside of the stator 10.

The opposite polarization of the magnets 65 of the rotor 60 with respect to that of the magnetic groups 20 of the stator 10 causes a repulsive force to be created between the rotor 60 and the stator 10. The conformation and positioning of the components of the magnetic bearing 100, in particular of the magnetic groups 20, and this repulsive force causes the rotor 60 to magnetically rise inside said cavity 12 of the stator 10. That is to say that the outer wall 61 of the rotor 60, in use, does not come into contact, or does not rest on the internal wall 11 of the stator 10.

According to a preferred aspect of the present disclosure, each magnetic assembly 20 is configured to create a first force region 21 and a second force region 22. More specifically, the repulsive force between the stator 10 and the rotor 60 is greater in the first region of force 21 with respect to the repulsive force between stator 10 and rotor 60 in the second force region 22.

In other words, at each magnetic group 20, the rotor 60 tends to be pushed towards a point of greater magnetic pressure which does not coincide with the axis of rotation X. In other words, each magnetic group 20 is configured to offset the rotor 60 from its axis of rotation X, or to move the axis of rotation X of rotor 60.

In still other words, the arrangement or geometry of each magnetic group 20 defines, preferably in said cavity 12, a region, or zone, in which the repulsive force between said magnetic group 20 and the plurality of magnets 65 of the rotor 60 is greater than a second region, or zone, preferably arranged diametrically opposite with respect to said first region, or force, in which the repulsive force between the magnetic group 20 itself and the plurality of magnets 65 of the rotor 60.

In this situation, the presence of several magnetic groups 20 and their arrangement however creates a situation of equilibrium which allows the magnetic bearing to be characterized by high stability.

More in detail, the first force region 21 of each magnetic group 20 is staggered in the radial direction Y with respect to the first force region 21 of a consecutive or subsequent magnetic group 20.

In particular, according to a preferred aspect of the present disclosure, the stator comprises three magnetic groups 20, wherein the first force region 21 of each magnetic group 20 is staggered of 120° in the radial direction Y with respect to the first force region 21 of a consecutive magnetic group 20. In other words, the first force region 21 of a first magnetic group 20 is staggered phase of 120° in the radial direction Y with respect to the first force region 21 of a second magnetic group 20 arranged in a consecutive longitudinal direction with respect to said first magnetic group 20 .

It follows that, according to this aspect, the rotor 60 rotates around the axis of rotation X in equilibrium on three points not aligned with the axis of rotation X itself. However, the number and phase shift of the regions with the greatest magnetic pressure stabilize the rotor 60 itself.

According to a further preferred aspect of the present disclosure, the stator comprises five magnetic groups 20, wherein the first force region 21 of each magnetic group 20 is staggered of 72° in the radial direction Y with respect to the first force region 21 of a magnetic group 20 consecutive. In other words, the first force region 21 of a first magnetic group 20 is staggered of 72° in the radial direction Y with respect to the first force region 21 of a second magnetic group 20 arranged consecutively in the longitudinal direction with respect to said first magnetic group 20.

Other combinations between the number of magnetic groups 20 and the phase shift between the first force regions 20 of consecutive magnetic groups are possible.

Preferably, the number of magnetic groups is odd. For example, it is possible to use 7, 9 or 11 magnetic groups, wherein the first force regions 20 of consecutive magnetic groups in the longitudinal direction staggered with each other in the radial direction of 51,43°, 40°, 32,72°, respectively.

According to a preferred aspect of the present disclosure, the difference in repulsive force between stator 10 and rotor 60 between the first force region 21 and the second force region 22 at each magnetic group 20 is determined by the geometry of the magnetic group 20 itself.

More particularly, according to this aspect, each magnetic group 20 is a ring magnet having the shape of an eccentric. It follows that, according to this aspect, each magnetic group 20 comprises a region arranged closer to the rotor 60 than the rest of the magnetic group itself. This therefore creates a first force region in which the repulsive force between the stator and rotor is greater than in a second force region.

For example, the stator 10 can comprise three or five eccentric rings wherein the eccentricity of two consecutive rings in the longitudinal direction L is staggered in the radial direction, respectively of 120° and 72°.

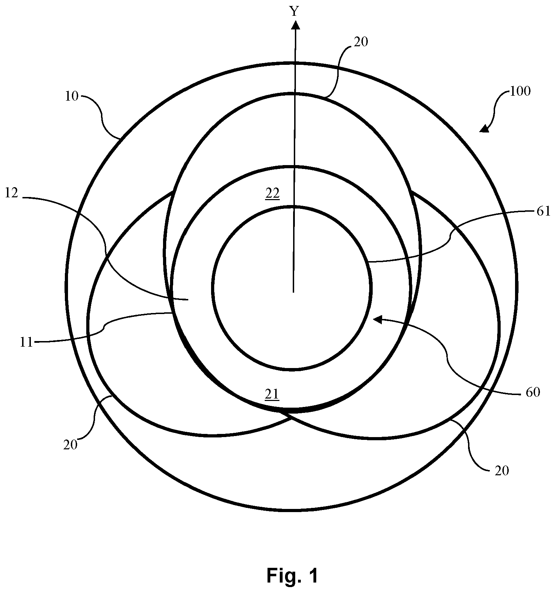

Figure 1 is a sectional schematic representation of a magnetic bearing 100 according to an embodiment of the present disclosure. In particular, the magnetic bearing 100 comprises a stator 10 in turn comprising three magnetic groups 20 arranged in succession along the longitudinal direction L. Each of said three magnetic groups 20 is a ring magnet having the shape of an eccentric. In particular, the eccentricity of the rings of consecutive magnetic groups 20 in the longitudinal direction L is staggered in the radial direction of 120°. It follows that the first regions of force 21 are also staggered of 120°.

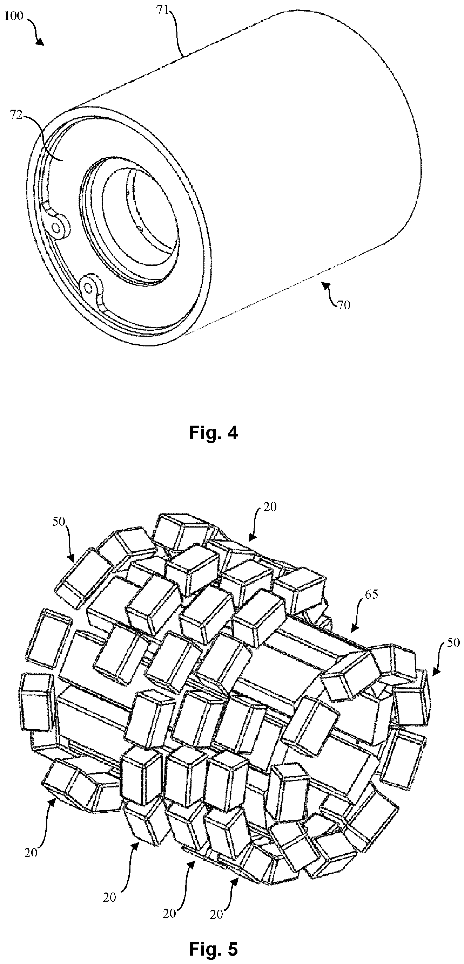

According to a preferred aspect of the present disclosure, each magnetic assembly comprises a circumferential arc magnet, or a plurality of magnets arranged aligned to form a circumference arc, at the internal surface 11 of the stator 10. Referring for example to Figure 5, which shows an embodiment of a magnetic bearing 100 according to an embodiment of the present disclosure in which only the magnets are visible, it is noted that each magnetic assembly 20 is formed by a plurality of parallelepiped-shaped magnets, aligned with each other circumferentially to form an arc of circumference.

According to this aspect, the difference in repulsive force at a magnetic group 20 between the first force region 21 and the second force region 22 is due to the presence of one or more magnets at a portion of the internal surface 11 of the stator 10 and the absence of magnets in the remaining internal surface 11 of the stator 10.

Preferably, the extension of the magnet shaped like an arc of circumference or of the plurality of magnets arranged aligned to form an arc of circumference varies between 200° and 250°, preferably between 210° and 230°.

This embodiment is more efficient in terms of static and dynamic load than that with magnets shaped like eccentric rings.

According to a preferred aspect of the present disclosure, the stator 10 comprises a plurality of annular portions 30 arranged consecutive in the longitudinal direction L. Each of these annular portions 30 is an annular element, concentric with respect to the stator 10, and comprises a seat 31 configured to house a magnetic assembly 20. Specifically, each seat 31 is configured to house a magnet and each ring magnet is housed in a seat 31 of one of the annular portions 30. Alternatively, each circumference arc magnet or each magnet of the plurality of magnets arranged aligned to form an arc of circumference is housed in a seat 31 of said annular portions 30 of the stator.

According to a further preferred aspect of the present disclosure, the stator 10 further comprises a plurality of annular separating elements 40. In detail, each annular separating element 40 is an annular element, concentric with respect to said stator 10, and configured to distance two consecutive annular portions 30. In particular, the annular separating elements 40 are arranged consecutively along the longitudinal direction L. Furthermore, preferably, each annular separating element 40 is interposed between two consecutive annular portions 30.

Preferably, the annular portions and/or the annular separating elements are made of plastic material.

According to an aspect of the present disclosure, the magnetic bearing 100 further comprises a containment device 50 configured to stabilize the rotor 60 in the longitudinal direction L. In other words, the containment device 50 is configured to keep the rotor 60 in place inside of the stator 10. In other words, the containment device 50 is configured to avoid movements in the longitudinal direction of the rotor 60. According to this aspect, the containment device 50 can comprise a first plurality of magnets aligned to form a ring arranged at of a first end of the rotor 60, and a second plurality of magnets aligned to form a ring arranged at a second end of the rotor 60 itself. According to this aspect, each magnet of said first plurality of magnets and of said second plurality is suitably polarized and inclined in order to maintain the rotor 60 in the containment device 50.

In combination or alternatively, the containment device 50 can comprise a thrust bearing, preferably made of ceramic.

According to a further preferred aspect of the present disclosure, the magnetic bearing 100 further comprises a covering element 70. This covering element 70 has the dual function of protecting the magnetic bearing 100 and shielding the magnetic field produced by the magnets of the bearing itself. In this regard, as shown in Figure 4, said covering element 70 can be for example a cylindrical element comprising a lateral surface 71 and two ring-shaped base surfaces 72 which are configured to prevent the entry of dust, or dirt, or other elements inside the magnetic bearing 100.

Preferably, the covering element 70 is made of steel.

Moreover, preferably, the base surfaces 72 are further configured to contain the containment device 50.

The present disclosure has as a further object a method for operating a magnetic bearing 100.

In describing this method, the elements of the magnetic bearing 100 involved in the method and having the same function and the same structure as the elements previously described retain the same reference number and are not again described in detail.

The method comprises a step of providing a stator 10 which extends along a longitudinal direction L and which comprises a cavity 12 which also extends along said longitudinal direction L and which is defined by an internal surface 11 of the stator 10.

The method further comprises a step of providing a rotor 60 which extends along the longitudinal direction L and which comprises a plurality of magnets polarized in the radial direction Y. More in detail, the rotor 60 is arranged concentric with the stator 10 and within the cavity 12 of the stator 10 itself. Furthermore, the plurality of magnets is arranged at a surface of the rotor 60 facing and spaced apart from the internal surface 11 of the stator 10.

In addition, the method provides for arranging, at the internal surface 11 of the stator 10, at least three magnetic groups 20 concentric to the stator 10 itself and consecutive along the longitudinal direction L. Each magnetic group 20 is polarized in the radial direction Y in the opposite direction. with respect to the magnets of the rotor 60 so as to create a repulsive force between stator 10 and rotor 60. Furthermore, each magnetic assembly is configured to create a first force region 21 and a second force region 22, wherein the repulsive force between said rotor 60 and said stator 10 in the first force region 21 is greater than the repulsive force between rotor 60 and stator 10 in the second force region 22.

According to a preferred aspect of the present disclosure, the magnetic groups 20 are arranged in the stator 10 so that the first force region 21 of each magnetic group 20 is staggered in the radial direction Y with respect to the first force region of a consecutive magnetic group 20. For example, three magnetic groups 20 can be arranged in the stator, so that the first force region 21 of each magnetic group 20 is staggered in the radial direction Y of 120° with respect to the first force region 21 of a consecutive magnetic group 20. Alternatively, five magnetic groups 20 can be arranged in the stator, so that the first force region 21 of each magnetic group 20 is staggered in the radial direction Y of 72° with respect to the first force region 21 of a consecutive magnetic group 20.

According to a preferred aspect of the present disclosure, the method further comprises a step of arranging in the stator 10 a plurality of annular portions 30 arranged consecutive in the longitudinal direction L. Each of said annular portions 30 comprises a seat 31 configured to house a magnetic group 20. Specifically, each seat 31 is configured to house a magnet: each ring magnet is housed in a seat 31 of one of the annular portions 30. Alternatively, each circumferential arc magnet or each magnet of the plurality of magnets arranged aligned to form an arc of circumference is housed in a seat 31 of said annular portions 30 of the stator.

According to a preferred final aspect of the present disclosure, the method further comprises a step of separating two consecutive annular portions 30 in the longitudinal direction. In other words, this step provides for spacing, or dividing, or longitudinally separating two consecutive annular portions 30. This separation is obtained by arranging in the stator 10 a plurality of annular separating elements 40 arranged consecutively along the longitudinal direction L, in which each separating element 40 is interposed between consecutive annular portions 30.

The object of the present disclosure has so far been described with reference to its embodiments. It is to be understood that other embodiments may exist which pertain to the same inventive core defined by the appended claims.

## Claims

1. Magnetic bearing (100) comprising a stator (10) and a rotor (60) wherein the rotor is arranged coaxial in a cavity (12) of the stator (10), and said cavity is defined by an internal surface (11) of the stator (10) and is extended along a longitudinal direction (L), wherein said rotor (60) is rotatable around an axis of rotation (X) in said cavity (12), wherein said rotor (60) comprises a plurality of magnets (65) arranged at the region of an external surface (61) of the rotor (60) facing, and spaced apart with respect to, said internal surface (11) of the stator (10), wherein each magnet of said plurality of magnets (65) is polarized in a radial direction (Y) and wherein said stator (10) comprises at least three magnetic groups (20) arranged consecutively along said longitudinal direction (L) on said internal surface (11) of the stator (10) and arranged staggered one with respect to the other in a radial direction (Y) around said axis of rotation and (X) and distributed along the internal surface of the stator around said rotor, wherein each magnetic group (20) is polarized in said radial direction (Y) in the opposite direction with respect to said plurality of magnets (65) of the rotor (60) to create a repulsive force between said rotor (60) and said stator (10), and wherein each magnetic group (20) is configured to create a first force region (21) and a second force region (22) radially opposite to said first force region (21) with respect to said axis of rotation (X), wherein the repulsive force between said stator (10) and said rotor (60) is greater in said first force region (21) than the repulsive force between said stator (10) and said rotor (60) in said second force region (22), **characterized in that** said at least three magnetic groups (20), when viewed from an axial end of the cavity (12), cover an entire cylindrical wall of the internal surface of the stator around said rotor.

2. Magnetic bearing (100) according to claim 1, wherein said at least three magnetic groups (20) are homogeneously distributed around said axis of rotation (X).

3. Magnetic bearing (100) according to any one of the preceding claims, wherein the first force region (21) of each magnetic group (20) is staggered in the radial direction (Y), with respect to the first force region of a consecutive magnetic group (20), of 120°.

4. Magnetic bearing (100) according to any one of the preceding claims, wherein the stator (10) comprises five magnetic groups (20), wherein the first force region (21) of each magnetic group (20) is staggered in the radial direction (Y) with respect to the first force region of a consecutive magnetic group (20) of 72°.

5. Magnetic bearing (100) according to any one of the preceding claims, wherein each magnetic group (20) is a magnet, preferably ring-shaped or disk-shaped magnet, having the shape of an eccentric, or a body, preferably ring-shaped or disk-shaped body, arranged in a way eccentric with respect to the rotation axis (X).

6. Magnetic bearing (100) according to any one of claims from 1 to 4, wherein each magnetic group (20) comprises a circumference arc magnet, or a plurality of magnets arranged aligned to form a circumference arc, in the region of said surface internal (11) of the stator (10).

7. Magnetic bearing (100) according to the preceding claim, wherein said circumference arc has an extension comprised between 210° and 230°.

8. Magnetic bearing (100) according to any one of claims 5 to 7, wherein the stator (10) comprises a plurality of annular portions (30) arranged consecutively in the longitudinal direction (L) wherein each of said annular portions (30) comprises a seat (31) configured to house a magnet and wherein each ring magnet is arranged in one of said annular portions (30) of the stator (10), or wherein the circumference arc magnet or each magnet of the plurality of magnets arranged aligned to form an arc of circumference is arranged in one of said annular portions (30) of the stator (10).

9. Magnetic bearing (100) according to the preceding claim, wherein the stator comprises a plurality of annular separating elements (40) arranged consecutively along the longitudinal direction (L), wherein each annular separating element (40) is interposed between consecutive annular portions (30).

10. Magnetic bearing (100) according to any one of the preceding claims, further comprising a containment device (50) configured to stabilize the rotor (60) in the longitudinal direction (L).

11. Method for operating a magnetic bearing (100) comprising the steps of:
- providing a stator (10) which extends along a longitudinal direction (L) provided with an internal surface (11) defining a cavity (12) of said stator (10) and which extends along said longitudinal direction (L);
- supplying a rotor (60) and arranging said rotor (60) concentric to said stator (10) in said cavity (12), wherein said rotor (60) comprises a plurality of magnets (65) polarized in a radial direction (Y) and arranged in the region of a surface of the rotor (60) facing and spaced with respect to said internal surface (11) of the stator (10);
- arranging on said internal surface (11) of said stator (10) at least three magnetic groups (20) along said longitudinal direction (L) and in a staggered way with respect to each other in radial direction (Y) around said axis of rotation (X) and distributed along the internal surface of the stator around said rotor (60),
- polarizing each magnetic group (20) in said radial direction (Y) in the opposite direction to said plurality of magnets (65) of the rotor (60) to create a repulsive force between said rotor (60) and said stator (10),
- creating for each magnetic group (20) a first force region (21) and a second force region (22) radially opposite to said first force region (21) with respect to said axis of rotation (X), wherein the repulsive force between said stator (10) and said rotor (60) is greater in said first force region (21) than the repulsive force between said stator (10) and said rotor (60) in said second force region (22), **characterized in that** said at least three magnetic groups (20) when viewed from an axial end of the cavity (12) cover an entire cylindrical wall of the internal surface of the stator around said rotor.

12. Method according to the preceding claim, wherein said at least three groups magnetic (20) are homogeneously distributed around said axis of rotation (X) and the repulsive force between said stator (10) and said rotor (60) in said first force region (21) and in said second force region (22) are set for each magnetic group (20) so as to create an overall balance or compensation of repulsive forces along said longitudinal direction (L) and said radial direction.

13. Method according to the claim 11 or 12, wherein three magnetic groups (20) are arranged in said stator (10), so that the first force region (21) of each magnetic group (20) is staggered in the radial direction (Y) with respect to the first force region (21) of a consecutive magnetic group (20) of 120°, or wherein five magnetic groups (20) are arranged in said stator (10), so that the first force region (21) of each magnetic group (20) is staggered in the radial direction (Y) with respect to the first force region (21) of a consecutive magnetic group (20) of 72°.

14. Method according to any one of claims from 11 to 13, further comprising a step of arranging in the stator (10) a plurality of annular portions (30) arranged consecutively in the longitudinal direction (L) wherein each of said annular portions (30) comprises a seat (31) configured to house a magnetic group (20).

15. Method according to the preceding claim, further comprising a step of separating two consecutive annular portions (30) in the longitudinal direction (L) by arranging in the stator (10) a plurality of annular separating elements (40) arranged consecutively along said longitudinal direction (L), wherein each separator element (40) is interposed between consecutive annular portions (30).

## Patentansprüche

1. Magnetlager (100) mit einem Stator (10) und einem Rotor (60), wobei der Rotor koaxial in einem Hohlraum (12) des Stators (10) angeordnet und der Hohlraum durch eine Innenfläche (11) des Stators (10) definiert ist und sich entlang einer Längsrichtung (L) erstreckt, wobei der Rotor (60) um eine Drehachse (X) in dem Hohlraum (12) drehbar ist, wobei der Rotor (60) eine Vielzahl von Magneten (65) aufweist, die an dem Bereich einer Außenfläche (61) des Rotors (60) angeordnet sind, welcher der Innenfläche (11) des Stators (10) zugewandt und hinsichtlich dieser beabstandet ist, wobei jeder Magnet der Vielzahl von Magneten (65) in einer radialen Richtung (Y) polarisiert ist und der Stator (10) mindestens drei Magnetgruppen (20) aufweist, die aufeinanderfolgend entlang der Längsrichtung (L) an der Innenfläche (11) des Stators (10) angeordnet und in der radialen Richtung (Y) um die Drehachse (X) zueinander versetzt angeordnet und entlang der Innenfläche des Stators um den Rotor herum verteilt sind, wobei jede Magnetgruppe (20) in der radialen Richtung (Y) in entgegengesetzter Richtung hinsichtlich der Vielzahl von Magneten (65) des Rotors (60) polarisiert sind, um eine Abstoßungskraft zwischen dem Rotor (60) und dem Stator (10) zu erzeugen, und wobei jede Magnetgruppe (20) dafür ausgelegt ist, einen ersten Kraftbereich (21) und einen zweiten Kraftbereich (22) zu erzeugen, der dem ersten Kraftbereich (21) hinsichtlich der Drehachse (X) radial entgegengesetzt ist, wobei die Abstoßungskraft zwischen dem Stator (10) und Rotor (60) in dem ersten Kraftbereich (21) größer ist als die Abstoßungskraft zwischen dem Stator (10) und Rotor (60) in dem zweiten Kraftbereich (22), **dadurch gekennzeichnet, dass** die mindestens drei Magnetgruppen (20), von einem axialen Ende des Hohlraums (12) her betrachtet, die gesamte zylindrische Wandung der Innenfläche des Stators um den Rotor herum bedecken.

2. Magnetlager (100) nach Anspruch 1, wobei die mindestens drei Magnetgruppen (20) gleichförmig um die Drehachse (X) herum verteilt sind.

3. Magnetlager (100) nach einem der vorhergehenden Ansprüche, wobei der erste Kraftbereich (21) jeder Magnetgruppe (20) hinsichtlich des ersten Kraftbereichs einer aufeinanderfolgenden Magnetgruppe (20) in der radialen Richtung (Y) um 120° versetzt ist.

4. Magnetlager (100) nach einem der vorhergehenden Ansprüche, wobei der Stator (10) fünf Magnetgruppen (20) aufweist, wobei der erste Kraftbereich (21) jeder Magnetgruppe (20) hinsichtlich des ersten Kraftbereichs einer aufeinanderfolgenden Magnetgruppe (20) in der radialen Richtung (Y) um 72° versetzt ist.

5. Magnetlager (100) nach einem der vorhergehenden Ansprüche, wobei jede Magnetgruppe (20) einen Magneten darstellt, vorzugsweise einen ringförmigen oder scheibenförmigen Magneten, der die Form eines Exzenters oder eines Körpers, vorzugsweise eines ringförmigen oder scheibenförmigen Körpers hat, der hinsichtlich der Drehachse (X) exzentrisch angeordnet ist.

6. Magnetlager (100) nach einem der Ansprüche 1 bis 4, wobei jede Magnetgruppe (20) einen umfangsbogenförmigen Magneten oder eine Vielzahl von Magneten aufweist, die so ausgerichtet angeordnet sind, dass sie einen Umfangsbogen im Bereich der Innenfläche (11) des Stators (10) bilden.

7. Magnetlager (100) nach dem vorherigen Anspruch, wobei der Umfangsbogen eine Erstreckung hat, die zwischen 210° und 230° liegt.

8. Magnetlager (100) nach einem der Ansprüche 5 bis 7, wobei der Stator (10) eine Vielzahl von ringförmigen Abschnitten (30) aufweist, die in der Längsrichtung (L) aufeinanderfolgend angeordnet sind, wobei jeder der ringförmigen Abschnitte (30) eine Aufnahme (31) aufweist, die dafür ausgelegt ist, einen Magneten aufzunehmen, und wobei jeder Ringmagnet in einem der ringförmigen Abschnitte (30) des Stators (10) angeordnet ist, oder wobei der umfangsbogenförmige Magnet oder jeder Magnet der Vielzahl von Magneten, die so ausgerichtet angeordnet sind, dass sie einen Bogen eines Umfangs bilden, in einem der ringförmigen Abschnitte (30) des Stators (10) angeordnet ist.

9. Magnetlager (100) nach dem vorhergehenden Anspruch, wobei der Stator eine Vielzahl von ringförmigen Trennelementen (40) aufweist, die entlang der Längsrichtung (L) aufeinanderfolgend angeordnet sind, wobei jedes ringförmige Trennelement (40) zwischen aufeinanderfolgenden ringförmigen Abschnitten (30) sitzt.

10. Magnetlager (100) nach einem der vorhergehenden Ansprüche, darüber hinaus mit einer Einschlussvorrichtung (50), die dafür ausgelegt ist, den Rotor (60) in der Längsrichtung (L) zu stabilisieren.

11. Verfahren zum Betreiben eines Magnetlagers (100), die folgenden Schritte umfassend:
- Bereitstellen eines Stators (10), der sich entlang einer Längsrichtung (L) erstreckt, versehen mit einer Innenfläche (11), die einen Hohlraum (12) des Stators (10) definiert, und der sich entlang der Längsrichtung (L) erstreckt;
- Zuführen eines Rotors (60) und Anordnen des Rotors (60) konzentrisch zum Stator (10) in dem Hohlraum (12), wobei der Rotor (60) eine Vielzahl von Magneten (65) aufweist, die in einer radialen Richtung (Y) polarisiert und in dem Bereich einer Oberfläche des Rotors (60) so angeordnet sind, dass sie der Innenfläche (11) des Stators (10) zugewandt und hinsichtlich dieser beabstandet sind;
- Anordnen von mindestens drei Magnetgruppen (20) an der Innenfläche (11) des Stators (10) entlang der Längsrichtung (L) und auf zueinander versetzte Weise in der radialen Richtung (Y) um die Drehachse (X) herum und verteilt entlang der Innenfläche des Stators um den Rotor (60) herum,
- Polarisieren jeder Magnetgruppe (20) in der radialen Richtung (Y) in der zu der Vielzahl von Magneten (65) des Rotors (60) entgegengesetzten Richtung, um eine Abstoßungskraft zwischen dem Rotor (60) und dem Stator (10) zu erzeugen,
- Erzeugen, für jede Magnetgruppe (20), eines ersten Kraftbereichs (21) und eines zweiten Kraftbereichs (22), der dem ersten Kraftbereich (21) hinsichtlich der Drehachse (X) radial entgegengesetzt ist, wobei die Abstoßungskraft zwischen dem Stator (10) und Rotor (60) in dem ersten Kraftbereich (21) größer ist als die Abstoßungskraft zwischen dem Stator (10) und Rotor (60) in dem zweiten Kraftbereich (22), **dadurch gekennzeichnet, dass** die mindestens drei Magnetgruppen (20), von einem axialen Ende des Hohlraums (12) her betrachtet, die gesamte zylindrische Wandung der Innenfläche des Stators um den Rotor herum bedecken.

12. Verfahren nach dem vorhergehenden Anspruch, wobei die mindestens drei Magnetgruppen (20) gleichförmig um die Drehachse (X) herum verteilt sind und die Abstoßungskraft zwischen dem Stator (10) und Rotor (60) in dem ersten Kraftbereich (21) und zweiten Kraftbereich (22) für jede Magnetgruppe (20) so eingestellt ist, dass entlang der Längsrichtung (L) und der radialen Richtung ein Gesamtausgleich oder eine Gesamtkompensation von Abstoßungskräften erzeugt wird.

13. Verfahren nach Anspruch 11 oder 12, wobei drei Magnetgruppen (20) im Stator (10) so angeordnet sind, dass der erste Kraftbereich (21) jeder Magnetgruppe (20) hinsichtlich des ersten Kraftbereichs (21) einer aufeinanderfolgenden Magnetgruppe (20) in der radialen Richtung (Y) um 120° versetzt ist, oder wobei fünf Magnetgruppen (20) im Stator (10) so angeordnet sind, dass der erste Kraftbereich (21) jeder Magnetgruppe (20) hinsichtlich des ersten Kraftbereichs (21) einer aufeinanderfolgenden Magnetgruppe (20) in der radialen Richtung (Y) um 72° versetzt ist.

14. Verfahren nach einem der Ansprüche 11 bis 13, darüber hinaus einen Schritt umfassend, im Stator (10) eine Vielzahl von ringförmigen Abschnitten (30) anzuordnen, die in Längsrichtung (L) aufeinanderfolgend angeordnet sind, wobei jeder der ringförmigen Abschnitte (30) eine Aufnahme (31) aufweist, die dafür ausgelegt ist, eine Magnetgruppe (20) aufzunehmen.

15. Verfahren nach dem vorherigen Anspruch, darüber hinaus einen Schritt umfassend, zwei aufeinanderfolgende ringförmige Abschnitte (30) in der Längsrichtung (L) zu trennen, indem im Stator (10) eine Vielzahl von ringförmigen Trennelementen (40) angeordnet wird, die entlang der Längsrichtung (L) aufeinanderfolgend angeordnet sind, wobei jedes Trennelement (40) zwischen aufeinanderfolgenden ringförmigen Abschnitten (30) sitzt.

## Revendications

1. Palier magnétique (100) comprenant un stator (10) et un rotor (60), dans lequel le rotor est agencé de manière coaxiale dans une cavité (12) du stator (10), et ladite cavité est définie par une surface interne (11) du stator (10) et est étendue le long d'une direction longitudinale (L), dans lequel ledit rotor (60) peut tourner autour d'un axe de rotation (X) dans ladite cavité (12), dans lequel ledit rotor (60) comprend une pluralité d'aimants (65) agencés au niveau de la région d'une surface externe (61) du rotor (60) faisant face et espacés par rapport à ladite surface interne (11) du stator (10), dans lequel chaque aimant de ladite pluralité d'aimants (65) est polarisé dans une direction radiale (Y) et dans lequel ledit stator (10) comprend au moins trois groupes magnétiques (20) agencés consécutivement le long de ladite direction longitudinale (L) sur ladite surface interne (11) du stator (10) et agencés de manière décalée les uns par rapport aux autres dans une direction radiale (Y) autour dudit axe de rotation (X) et répartis le long de la surface interne du stator autour dudit rotor, dans lequel chaque groupe magnétique (20) est polarisé dans ladite direction radiale (Y) dans la direction opposée par rapport à ladite pluralité d'aimants (65) du rotor (60) afin de créer une force de répulsion entre ledit rotor (60) et ledit stator (10), et dans lequel chaque groupe magnétique (20) est configuré pour créer une première région de force (21) et une seconde région de force (22) radialement opposée à ladite première région de force (21) par rapport audit axe de rotation (X), dans lequel la force de répulsion entre ledit stator (10) et ledit rotor (60) est plus importante dans ladite première région de force (21) que la force de répulsion entre ledit stator (10) et ledit rotor (60) dans ladite seconde région de force (22), **caractérisé en ce que** lesdits au moins trois groupes magnétiques (20), lorsqu'ils sont observés depuis une extrémité axiale de la cavité (12), recouvrent toute une paroi cylindrique de la surface interne du stator autour dudit rotor.

2. Palier magnétique (100) selon la revendication 1, dans lequel lesdits au moins trois groupes magnétiques (20) sont répartis, de manière homogène, autour dudit axe de rotation (X).

3. Palier magnétique (100) selon l'une quelconque des revendications précédentes, dans lequel la première région de force (21) de chaque groupe magnétique (20) est décalée dans la direction radiale (Y) par rapport à la première région de force d'un groupe magnétique (20) consécutif, de 120°.

4. Palier magnétique (100) selon l'une quelconque des revendications précédentes, dans lequel le stator (10) comprend cinq groupes magnétiques (20), dans lequel la première région de force (21) de chaque groupe magnétique (20) est décalée dans la direction radiale (Y) par rapport à la première région de force d'un groupe magnétique (20) consécutif, de 72°.

5. Palier magnétique (100) selon l'une quelconque des revendications précédentes, dans lequel chaque groupe magnétique (20) est un aimant, de préférence un aimant de forme annulaire ou en forme de disque ayant la forme d'un excentrique, d'un corps, de préférence un corps de forme annulaire ou en forme de disque, agencé d'une manière excentrique par rapport à l'axe de rotation (X).

6. Palier magnétique (100) selon l'une quelconque des revendications 1 à 4, dans lequel chaque groupe magnétique (20) comprend un aimant d'arc circonférentiel, ou une pluralité d'aimants alignés pour former un arc circonférentiel, dans la région de ladite surface interne (11) du stator (10).

7. Palier magnétique (100) selon la revendication précédente, dans lequel ledit arc circonférentiel a une extension comprise entre 210° et 230°.

8. Palier magnétique (100) selon l'une quelconque des revendications 5 à 7, dans lequel le stator (10) comprend une pluralité de parties annulaires (30) agencées de manière consécutive dans la direction longitudinale (L), dans lequel chacune desdites parties annulaires (30) comprend un siège (31) configuré pour loger un aimant et dans lequel chaque aimant annulaire est agencé dans l'une desdites parties annulaires (30) du stator (10), ou dans lequel l'aimant d'arc circonférentiel ou chaque aimant de la pluralité d'aimants alignés pour former un arc circonférentiel, est agencé dans l'une desdites parties annulaires (30) du stator (10).

9. Palier magnétique (100) selon la revendication précédente, dans lequel le stator comprend une pluralité d'éléments de séparation annulaires (40) agencés consécutivement le long de la direction longitudinale (L), dans lequel chaque élément de séparation annulaire (40) est intercalé entre les parties annulaires (30) consécutives.

10. Palier magnétique (100) selon l'une quelconque des revendications précédentes, comprenant en outre un dispositif de confinement (50) configuré pour stabiliser le rotor (60) dans la direction longitudinale (L).

11. Procédé pour actionner un palier magnétique (100) comprenant les étapes consistant à :
- prévoir un stator (10) qui s'étend le long d'une direction longitudinale (L) prévue avec une surface interne (11) définissant une cavité (12) dudit stator (10) et qui s'étend le long de ladite direction longitudinale (L) ;
- fournir un rotor (60) et agencer ledit rotor (60) de manière concentrique par rapport audit stator (10) dans ladite cavité (12), dans lequel ledit rotor (60) comprend une pluralité d'aimants (65) polarisés dans une direction radiale (Y) et agencés dans la région d'une surface du rotor (60) faisant face et espacés par rapport à ladite surface interne (11) du stator (10) ;
- agencer sur ladite surface interne (11) dudit stator (10), au moins trois groupes magnétiques (20) le long de ladite direction longitudinale (L) et d'une manière décalée les uns par rapport aux autres dans la direction radiale (Y) autour dudit axe de rotation (X) et répartis le long de la surface interne du stator autour dudit rotor (60),
- polariser chaque groupe magnétique (20) dans ladite direction radiale (Y) dans la direction opposée à ladite pluralité d'aimants (65) du rotor (60) afin de créer une force de répulsion entre ledit rotor (60) et ledit stator (10),
- créer pour chaque groupe magnétique (20), une première région de force (21) et une seconde région de force (22) radialement opposée à ladite première région de force (21) par rapport audit axe de rotation (X), dans lequel la force de répulsion entre ledit stator (10) et ledit rotor (60) est plus importante dans ladite première région de force (21) que la force de répulsion entre ledit stator (10) et ledit rotor (60) dans ladite seconde région de force (22), **caractérisé en ce que** lesdits au moins trois groupes magnétiques (20), lorsqu'ils sont observés à partir d'une extrémité axiale de la cavité (12), recouvrent toute une paroi cylindrique de la surface interne du stator autour dudit rotor.

12. Procédé selon la revendication précédente, dans lequel lesdits au moins trois groupes magnétiques (20) sont répartis, de manière homogène, autour dudit axe de rotation (X) et les forces de répulsion entre ledit stator (10) et ledit rotor (60) dans ladite première région de force (21) et dans ladite seconde région de force (22) sont réglées pour chaque groupe magnétique (20) afin de créer un équilibre global ou compensation des forces de répulsion le long de ladite direction longitudinale (L) et ladite direction radiale.

13. Procédé selon la revendication 11 ou 12, dans lequel trois groupes magnétiques (20) sont agencés dans ledit stator (10), de sorte que la première région de force (21) de chaque groupe magnétique (20) est décalée dans la direction radiale (Y) par rapport à la première région de force (21) d'un groupe magnétique (20) consécutif, de 120°, ou bien dans lequel cinq groupes magnétiques (20) sont agencés dans ledit stator (10), de sorte que la première région magnétique (21) de chaque groupe magnétique (20) est décalée dans la direction radiale (Y) par rapport à la première région de force (21) d'un groupe magnétique (20) consécutif de 72°.

14. Procédé selon l'une quelconque des revendications 11 à 13, comprenant en outre une étape consistant à agencer, dans le stator (10), une pluralité de parties annulaires (30) agencées consécutivement dans la direction longitudinale (L), dans lequel chacune desdites parties annulaires (30) comprend un siège (31) configuré pour loger un groupe magnétique (20).

15. Procédé selon la revendication précédente, comprenant en outre une étape consistant à séparer deux parties annulaires (30) consécutives dans la direction longitudinale (L) en agençant dans le stator (10), une pluralité d'éléments de séparation annulaires (40) agencés consécutivement le long de ladite direction longitudinale (L), dans lequel chaque élément de séparation (40) est intercalé entre des parties annulaires (30) consécutives.
